# EUROPÄISCHE PATENTSCHRIFT

(11) **EP 0 836 566 B1**
(45) Veröffentlichungstag und Bekanntmachung des Hinweises auf die Patenterteilung: **22.09.1999**
(21) Anmeldenummer: 96920835.4
(22) Anmeldetag: 20.06.1996
(51) Int. Cl.: B60T 8/88

(54) **ERFASSUNG UND AUSWERTUNG VON SICHERHEITSKRITISCHEN MESSGRÖSSEN**
ACQUISITION AND EVALUATION OF MEASURED VARIABLES WHICH ARE CRITICAL FOR SAFETY
SAISIE ET EVALUATION DE VALEURS CRITIQUES EN TERMES DE SECURITE

(30) Priorität: 11.07.1995 DE 19525217
(43) Veröffentlichungstag der Anmeldung: 22.04.1998
(73) Patentinhaber: Continental Teves AG & Co. oHG, 60488 Frankfurt (DE)
(72) Erfinder: LOHBERG, Peter, D-61381 Friedrichsdorf (DE); BURGHARDT, Roland, D-60439 Frankfurt am Main (DE)
(86) Internationale Anmeldenummer: EP9602675
(87) Internationale Veröffentlichungsnummer: WO9702972

(56) Entgegenhaltungen:
- DE-A- 4 004 086
- DE-A- 4 214 642
- DE-A- 4 341 082
- ATZ, Bd. 93, Nr. 7/8, Juli 1991 - August 1991, STUTTGART, DE, Seiten 406-414, XP000267526 STÖCKER ET AL.: "ZUVERLÄSSIGKEIT VON ELEKTRONISCHEN BAUTEILEN IM AUTOMOBIL"

## Beschreibung

Die Erfindung bezieht sich auf ein Verfahren und eine Anordnung zur Erfassung und Auswertung von sicherheitskritischen Meßgrößen, bei dem die gleichen Meßgrößen mit Hilfe von zwei oder mehreren, voneinanderunabhängigen Meßkanälen erfaßt werden.

Zu den sicherheitskritischen Meßgrößen zählen insbesondere die als Eingangsgrößen eines Kraftfahrzeug-Regelungssystems benötigten Größen, die die Gierwinkelbewegungen des Kraftfahrzeugs darstellen. Zu den Regelungssystemen dieser Art gehören vor allem Fahrstabilitätsregelungen (FSR oder ASMS, d.h. automatische Stabilitäts-Management-Systeme), aber auch Antiblockiersystem (ABS), Antriebsschlupfregelungen (ASR) und dergleichen.

Verfahren und Anordnungen zur Kontrolle und Begrenzung unerwünschter Fahrzeug-Gierbewegungen, also von Bewegungen um die Fahrzeughochachse, sind bekannt. Mit Hilfe von Sensoren wird bei solchen Systemen der Lenkwinkel, die Gaspedalstellung, der Bremsdruck und das Drehverhalten der einzelnen Fahrzeugräder gemessen. Auf Basis dieser Meßwerte wird auf den Fahrerwunsch geschlossen und die Soll-Gierbewegung bzw. Gierrate des Fahrzeugs berechnet. Mit weiteren Sensoren werden gleichzeitig die auf das Fahrzeug wirkende Querbeschleunigung und die Gierrate ermittelt. Überschreitet die Abwei chung der Ist-Gierbewegung des Fahrzeugs von der Soll-Gierbewegung einen vorgegebenen, die Fahrstabilität gefährdenden Wert, wird über das System durch gezielten Bremseneingriff und/oder Motoreingriff stabilisierend eingegriffen und die Gierbewegung auf zulässige Werte begrenzt.

Aus der DE 40 04 086 A1 ist bereits ein System zur elektronischen Steuerung oder Regelung einer Brennkraftmaschine bekannt, bei dem wenigstens eine Meßeinrichtung wenigstens ein repräsentierendes Meßsignal erzeugt. Dabei bestehen die Meßeinrichtungen jeweils aus mehreren Sensoren, die durch Vergleich der von ihnen erzeugten Signalwerte miteinander auf Einhaltung eines vorgegebenen Toleranzbereichs und dadurch auf ihre Funktionsfähigkeit überprüft werden.

Von Fahrzeug-Regelungssystemen, wie Fahrstabilitätsregelungssystemen, ist grundsätzlich eine hohe Funktionssicherheit und -zuverlässigkeit zu verlangen, weil Fehlfunktionen - z.B. Bremsbetätigung oder Bremsdruckreduzierung zum falschen Zeitpunkt - gefährliche Situationen herbeiführen können. Die gleichen Anforderungen bezüglich Funktionssicherheit und Zuverlässigkeit gelten dann natürlich auch für die Sensoren, die die Eingangssignale für derartige Regelsysteme liefern; bei falschen, unsicheren oder ungenauen Eingangssignalen ist keine zuverlässige, sichere und wirkungsvolle Regelung denkbar. Es ist daher erforderlich, die Funktion der Sensoren ständig zu überwachen, Defekte zu signalisieren oder beim Auftreten von Defekten die Regelung abzuschalten, um zumindest eine Regelung in falsche Richtung - z.B. einen fälschlichen Bremsdruckabbau - zu verhindern.

Gierratensensoren werden insbesondere für Fahrstabilitätsregelungssysteme (FSR, ASMS) benötigt. In diesem Anwendungsbeispiel liefern sie Informationen bzw. Meßgrößen, die sicherheitskritisch sind, weil ein durch ein falsches Signal ausgelöster Bremseingriff natürlich für das Fahrzeug gefährlich werden könnte. Die bekannten, für solche Regelungssysteme geeigneten Gierratensensoren sind kompliziert und relativ teuer, weil von ihnen eine hohe Meßgenauigkeit, hohe Präzision und sichere Funktion verlangt werden muß. Das Erkennen von Fehlfunktionen bereitet ebenfalls Schwierigkeiten, weil keine definierte Fahrzeugbewegung, die eine zum Kalibrieren des Systems und des Sensors geeignete Giergeschwindigkeit ergäbe, erzeugt werden kann; es läßt sich lediglich bei Fahrzeugstillstand eine eventuelle Nullpunktabweichung erkennen und korrigieren.

Der Erfindung liegt nun die Aufgabe zugrunde, den erforderlichen Aufwand für die Erfassung und Auswertung solcher sicherheitskritischer Meßgrößen, bei gleichzeitigem Erhalt oder Erhöhen der Funktionssicherheit, in Grenzen zu halten oder gar zu reduzieren.

Es hat sich gezeigt, daß diese Aufgabe durch das im beigefügten Hauptanspruch beschriebene Verfahren gelöst werden kann, dessen Besonderheit darin besteht, daß einer dieser Meßkanäle den gesamten Meßbereich und der oder die anderen Meßkanäle Teilmeßbereiche erfassen. Zur Fehlererkennung werden die Ausgangsgrößen der Meßkanäle logisch verknüpft, und es wird die Übereinstimmung der Meßgrößen in dem von mehreren Meßkanälen erfaßten Meßbereich und/oder die Plausibilität der Meßgrößen oder Meßergebnisse überprüft. Eine Anordnung zur Durchführung des Verfahrens und einige vorteilhafte Ausführungsbeispiele dieser Anordnung sind ebenfalls in den Ansprüchen beschrieben.

Die Erfindung beruht also auf der Erkenntnis, daß sich - bezogen auf das Beispiel der Gierratenmessung für eine Fahrstabilitätsregelung - mit Hilfe eines einzelnen Gierratensensors bzw. Gierraten-Meßkanals schon deswegen keine ausreichende Funktionssicherheit und -zuverlässigkeit erzielen läßt, weil auch bei höchstem Herstellungsaufwand durch bestimmte Bauteiledefekte "schleichende" Fehler auftreten können, die nicht zu erkennen sind. Solche Defekte sind beispielsweise die Folge von fehlerhaften Kondensatoren, offenen hochomigen Halbleitereingängen, Wackelkontakten etc.. Die Erkennung dieser Fehler muß über den Unweg von Indizien geschehen, die aus Hilfsgrößen und Kausalitäten bzw. Plausibilitätkriterien gewonnen werden, die mit dem Giervorgang in mehr oder weniger mittelbarem Zusammenhang stehen. Der Erkennungsmechanismus reagiert daher prinzipbedingt mit geringerer Auflösung und größerer Trägheit als bei einem unmittelbaren Vergleichsverfahren. Um diesen Nachteil zu kompensieren, ist es erforderlich, entsprechend feiner zu messen. Dies führt zu der Notwendigkeit, einen noch präziseren Gierratensensor einzusetzen, der sowohl den Anforderungen nach großem Meßbereich als auch nach erhöhter Auflösung und hoher Präzision im Bereich kleiner bis mittlerer Gierraten genügen muß. Die Relation von technischem Aufwand zu erreichbarer Genauigkeit steigt hierbei jedoch überproportional. Trotz des hohen Aufwandes läßt sich nicht vermeiden, daß Fehlfunktionen des Sensors unerkannt bleiben. Um Gefahren als Folge von fälschlichen Informationen und Regelungsvorgängen auszuschließen, muß daher bereits bei einem Verdacht auf eine Fehlfunktion das Regelungssystem sofort abgeschaltet werden. Tritt ein solcher Fehler während eines Regelungsvorgangs auf, ist das Systemverhalten unbestimmt. Es sind höchste Anforderungen an die Zuverlässigkeit der Bauteile und Selbsttestfunktionen des Sensors notwendig, um die Wahrscheinlichkeit des Auftretens einer solchen Fehlfunktion gering zu halten.

Durch eine redundante Gierratenmessung mit zwei gleichen Meßkanälen bzw. Gierratensensoren und Vergleich der Meßergebnisse auf Übereinstimmung lassen sich diese technischen Nachteile der bekannten Systeme nur teilweise verringern. Bei geringfügigen Abweichungen muß sofort abgeschaltet werden. Beide Gierratensensoren müssen hochpräzise den gesamten Meßbereich erfassen. Der Kostenaufwand für zwei derartige Gierratensensoren ist sehr hoch.

Die Erfindung beschreitet daher eine anderen Lösungsweg. Es werden zwei (oder mehrere) vollständige, voneinander unabhängige Meßkanäle verwendet, von denen nur einer auf den gesamten Meßbereich eingestellt ist, der andere dagegen nur einen Teil des Meßbereichs erfaßt, jedoch mit wesentlich höherer Auflösung.

Die durch das erfindungsgemäße Verfahren und der entsprechenden Ordnung erreichten Vorteile sind vielfältig. Zunächst werden durch den parallelen Betrieb zweier Meßkanäle alle Vorteile einer redundanten Gierratenmessung genutzt; es wird eine wechselseitige Überwachung der beiden unabhängigen Meßkanäle ermöglicht, wobei der Grad der Übereinstimmung der synchron erfaßten Gierraten-Meßwerte als direktes Maß für die Funktionssicherheit der Gierratensensoren ausgewertet werden kann. Diese Überwachung läßt sich permanent durchführen. Sie ermöglicht eine unmittelbare und sichere Erkennung langsam fortschreitender Bauteilefehler in einem der beiden Sensoren oder Meßkanäle. In bestimmten Situationen - z.B. außerhalb eines Regelungsvorgangs - und bei bestimmten Fehlern wird sofort abgeschaltet. In anderen Situationen, wenn z.B eine der beiden Meßkanäle einen definierten Totalausfall zeigt, läßt sich das Regelsystem für eine Notlaufzeit auch mit dem verbleibenden Meßkanal allein betreiben.

Weitere entscheidende Vorteile beruhen auf der unterschiedlichen Ausbildung oder Dimensionierung der beiden Meßkanäle. Ein Meßkanal erfaßt den gesamten Meßbereich. Da jedoch der andere Meßkanal nur einen Teil des gesamten Meßbereichs betrachtet, diesen quasi nach Art einer Lupe herausvergrößert, wird automatisch - ohne erhöhten technischen Aufwand - durch die höhere Steilheit der Kennlinie bzw. höhere Auflösung eine Präzisionssteigerung der Gierratenerfassung erzielt.

Weitere Einzelheiten der Erfindung gehen aus der folgenden Beschreibung von Ausführungsbeispielen anhand der beigefügten Abbildungen hervor.

Es zeigen
- Fig. 1A: symbolisch ein Fahrzeug und dessen Hochachse,
- Fig. 1B: in schematischer Darstellung eine Anordnung der erfindungsgemäßen Art und
- Fig. 2: ein Diagramm zur Veranschaulichung der unterschiedlichen Kennlinien bzw. Meßbereiche der Meßkanäle nach Fig. 1B.

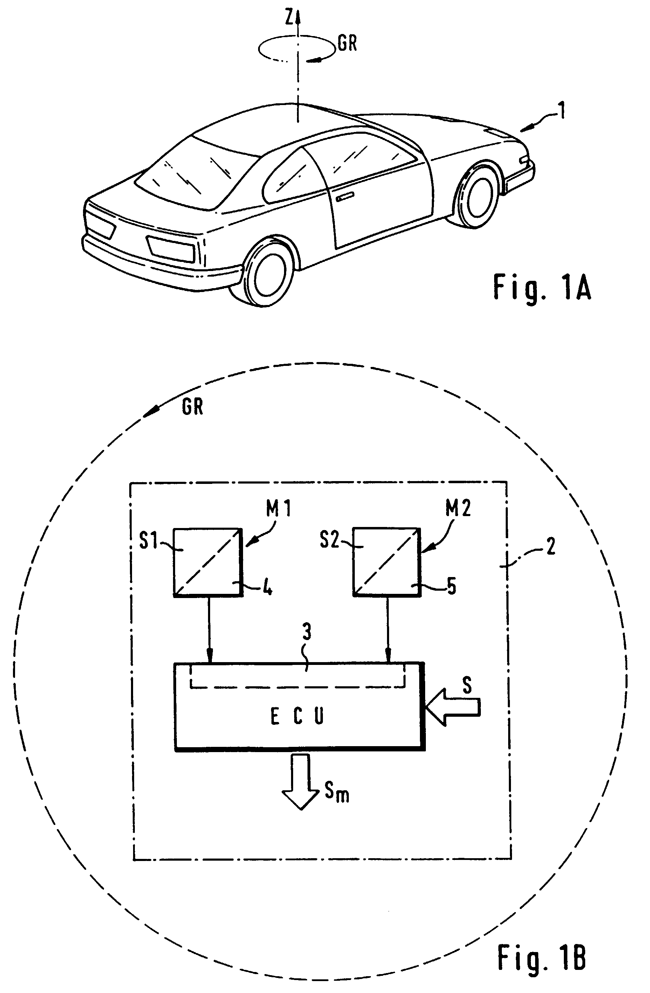

Fig. 1A dient lediglich zur Veranschaulichung einer Gierbewegung des Fahrzeugs 1, nämlich einer Drehbewegung entlang des Pfeiles GR um die Hochachse Z eines Fahrzeugs 1.

In dem Fahrzeug 1 ist eine Anordnung 2 zur Erfassung und Auswertung von Gierbewegungen des Fahrzeugs angeordnet. Der gestrichelt dargestellte, mit einem Pfeil versehene Kreis symbolisiert die Gierbewegung oder Gierrate, die die Anordnung 2 erfassen soll.

Die gesamte Anordnung 2 oder zumindest die zugehörigen Gierratensensoren sind in dem Fahrzeug 1 natürlich derart plaziert, daß sie ebenso wie das Fahrzeug die zu messende Gierbewegung ausführen.

Die Anordnung 2 besteht im wesentlichen aus zwei Meßkanälen M1,M2 mit den Gierratensensoren S1 und S2 sowie aus einer elektronischen Schaltung 3, die festverdrahtete Schaltkreise und/oder programmgesteuerte Schaltungen, wie Microprozessoren, Microcomputer etc., umfaßt. Diese Schaltung 3 ist im dargestellten Ausführunsgbeispiel Bestandteil eines Fahrstablitätsregelungssystems, dem zusätzliche Meßgrößen oder Signale Sn von weiteren Sensoren (Querbeschleunigungssensoren, Lenkwinkelsensoren, Bremsdrucksensoren usw.) zugeführt werden. Die Schaltung 3 gibt ihrerseits Signale Sm an weitere, nicht dargestellte Reglerstufen oder Regelungssysteme des Fahrzeugs ab.

Die eigentlichen Gierratensensoren S1,S2 sind Bestandteil der Meßkanäle M1,M2, die in vorliegender Ausführungsform außer den Sensoren S1,S2 noch die zugehörigen Signal-Verstärkungsschaltungen 4,5 umfassen. Natürlich könnten in der Praxis diese Verstärkungsschaltungen auch als Bestandteile der Schaltung 3 ausgebildet werden.

In dem Ausführungsbeispiel nach Fig. 1B ist der Meßkanal M1 derjenige, der auf den gesamten Gierraten-Meßbereich, der von der Anordnung 2 erfaßt werden soll, eingestellt ist. Der Meßkanal M1 ist zweckmäßigerweise auf einen Meßbereich von etwa ± 75 deg./s ("deg./s" ist die gängige Schreibweise für Winkelgrad pro Sekunde) eingestellt. Der Meßkanal M2 löst dagegen nur einen Meßbereich von etwa ± 25 deg./s aus, also nur ein Drittel des Meßbereichs des Meßkanals M1.

Für die Ausbildung der Meßkanäle M1,M2 gibt es grundsätzlich mehrere Möglichkeiten. Nach einem bevorzugten Ausführungsbeispiel der Erfindung werden gleichartige, nach dem gleichen physikalischen Prinzip aufgebaute Gierratensensoren S1,S2 verwendet und diese durch entsprechende Auslegung der zugehörigen Signal-Verstärkungsschaltungen 4,5 auf die unterschiedlichen Meßbereiche eingestellt. Geeignet für die Durchführung des erfindungsgemäßen Verfahrens sind z.B. Gierratensensoren mit einer Stimmgabel aus Quarz, die durch eine entsprechende elektronische Anregungsschaltung zu einem Stimmgabeloszillator ergänzt ist. Solche Gierratensensoren lassen sich durch entsprechende Einstellung der Signal-Verstärkungsfaktoren auf den gewünschten Meßbereich einstellen.

Nach einem Ausführungsbeispiel der Erfindung werden zwei gleichartige Gierratensensoren S1,S2 dieser Art verwendet, die mit unterschiedlichen, mit Hilfe der Signal-Verstärkungsschaltungen 4,5 fest eingestellten Skalierfaktoren betrieben werden.

Die über die beiden Meßkanäle M1,M2 gewonnen Gierraten-Meßgrößen werden parallel erfaßt und in der elektronischen Schaltung 3 ausgewertet. Der Gierratensensor S1 bzw. der Meßkanal M1 löst den gesamten Meßbereich auf, der Sensor S2 bzw. Meßbereich M2 ist dagegen nur auf einen vergleichsweise schmalen Meßbereich ausgelegt, den er jedoch wesentlich höher auflöst; das Verhältnis der Faktoren, die die Auflösung angeben, ist umgekehrt proportional zu den Meßbereichen, auf den die beiden Meßkanäle eingestellt sind.

In diesem Ausführungsbeispiel fallen die Nullpunkte der beiden Meßbereiche zusammen.

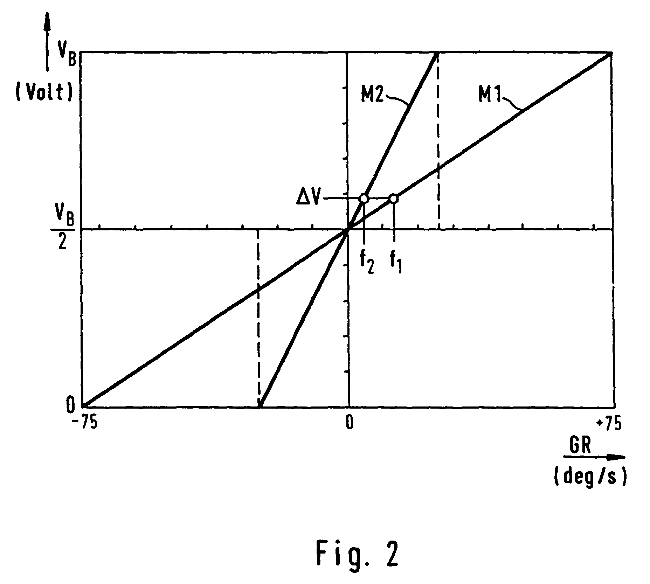

Fig. 2 gilt für ein solches Auslegungsbeispiel und zeigt die Auswirkung der unterschiedlich eingestellten Meßbereiche für die Gierratensensoren S1,S2 bzw. für die Meßkanäle M1,M2. Dargestellt ist die Kennlinie oder Spannungsabgabe V_{B} der Meßkanäle M1,M2 in Abhängigkeit von der Gierrate GR . Die Steilheiten der Übertragungskennlinien der beiden Meßkanäle verhalten sich im dargestellten Beispiel wie 3 : 1, da der volle Ausgangsspannungsbereich V_{B} bei dem Meßkanal M1 zur Auflösung von ± 75 deg./s, bei dem Meßkanal M2 dagegen nur zur Erfassung und Auflösung von ± 25 deg./s genutzt wird. Ein gleichgroßer Offset ΔV - verursacht durch eine Störspannung, eine Ungenauigkeit in der Signalaufbereitungsschaltung usw. - macht sich bei der steilen Kennlinie des Meßkanals M2 als relativ kleiner Fehler f₂ bemerkbar, während der gleiche Offset bei der flachen Kennlinie des auf den Gesamt-Meßbereich ausgelegten Meßkanals M1 zu der wesentlich höheren, fehlerhaften Anzeige einer Gierrate f₁ führt. Der Gierratensensor S2 bzw. der Meßkanal M2 wirkt also gewissermaßen als Lupe, weil durch die Einstellung auf den Teil-Meßbereich - hier auf ± 25 deg./s - eine sehr viel höhere Auflösung möglich wird, was wiederum zu einer höheren Meßgenauigkeit und Präzision führt.

Erfindungsgemäß ist es auch möglich, Gierratensensoren S1,S' zu verwenden, die auf physikalisch unterschiedlichen Funktionsprinzipien beruhen bzw. die einen unterschiedlichen technisch-technologischen Aufbau besitzen. Die Einstellung auf den gesamten Meßbereich bzw. auf einen Teilmeßbereich kann wiederum mit Hilfe der zugehörigen Signal-Aufbereitungsschaltung oder bei der Auswertung der Signale mit Hilfe der Schaltung 3 realisiert werden. Andererseits können auch Gierratensensoren verwendet werden, die aufgrund ihres Aufbaues unterschiedliche Meßbereiche erfassen.

Eine andere Möglichkeit zur Ausbildung der Gierratensensoren und der Meßkanäle besteht darin, den Sensor S1 bzw. den Meßkanal M1 mit einem fest eingestellten Skalierfaktor auf den gesamten Meßbereich einzustellen, also beispielsweise auf ± 75 deg./s, den Sensor S2 bzw. den Meßkanal M2 derart auszulegen, daß dessen Skalierfaktor veränderlich und steuerbar wird. Bei Betriebsstart wird dann zweckmäßigerweise der Skalierfaktor des Meßkanals M2'' auf den Skalierfaktor des Meßkanals M1 eingestellt, so daß ebenfalls der gesamte Meßbereich aufgelöst wird. In Abhängigkeit von der Dynamik des Giervorganges oder von der erforderlichen Auflösung in der jeweiligen Fahr- oder Regelsituation wird dann der Skalierfaktor des Meßkanals M2 auf kleinere Werte reduziert, mit dem Ziel, den jeweils gültigen Optimalwert der Auflösung einzustellen.

Nach einer anderen Ausbildung der Meßkanäle M1,M2 ist vorgesehen, den Skalierfaktor des zweiten Meßkanals in Abhängigkeit von der Dynamik des Giervorganges dergestalt zu verändern, daß der Mittelpunkt des Auflösungsbereichs des Kanals M2 dem Mittelwert der Gierrate des Giervorganges folgt. Bei einem Mittelwert der Gierrate von 30 deg./s würde beispielsweise der Meßkanal M2 seinen Arbeitspunkt oder Nullpunkt derart verschieben, daß M2 nicht mehr den Teilbereich von ± 25 deg./s, sondern einen Bereich von 5 deg./s bis 55 deg./s auflöst.

Das erfindungsgemäße Verfahren ist nicht nur zur Ermittlung von Gierraten geeignet, sondern läßt sich gleichermaßen zur Erfassung und Auswertung von sicherheitskritischen Meßgrößen anderer Art anwenden. Bei Fahrstabilitätsregelungssystemen kann nach dem gleichen Verfahren die Querbeschleunigung des Fahrzeugs ermittelt werden. Hierbei könnte zweckmäßigerweise ein erster Meßkanal z.B. auf den Meßbereich von ± 1,5 g, wobei mit 'g' die Erdbeschleunigungskonstante gemeint ist, und ein zweiter Meßkanal auf dem Meßbereich von ± 0,5 g eingestellt werden.

Das erfindungsgemäße Verfahren ist grundsätzlich zur Erfassung und Auswertung von Meßgrößen bei Systemen geeignet, bei denen aus Sicherheitsgründen eine redundante Erfassung der Meßgrößen notwendig ist und die Auflösung des Meßbereichs von Bedeutung ist.

Das Verfahren nach der Erfindung ist nicht nur zur Fehlererkennung bei der Erfassung und Auswertung von sicherheitskritischen Meßgrößen geeignet, sondern ermöglicht generell eine wesentlich höhere Auflösung eines Meßbereichs mit einfachen Mitteln. Erreicht wird dies durch die beschriebene Erfassung der Meßgrößen mit Hilfe von voneinander unabhängigen Meßkanälen, von denen ein Meßkanal auf dem gesamten Meßbereich, der oder die anderen Kanäle auf Teilmeßbereiche eingestellt sind. Durch die Auflösung und Betrachtung des Teilmeßbereichs durch eine "Lupe" wird in dem Teilmeßbereich - eben als Folge der Vergrößerung - eine entsprechend höhere Auflösung erreicht.

Der Teilmeßbereich kann auf denselben Nullpunkt wie der Gesamtmeßbereich gelegt werden, wobei man ausnutzt, daß bei vielen Meßsystemen oder Regelungssystemen die meisten Regelungsvorgänge nur in einem bestimmten, relativ engen Abschnitt des Gesamt-Meßbereichs stattfinden. Der Teilmeßbereich kann allerdings auch in der beschriebenen Weise nachgeführt werden, z.B. dem Mittelwert der Meßgröße.

## Patentansprüche

1. Verfahren zur Erfassung und Auswertung von sicherheitskritischen Meßgrößen, bei dem die gleichen Meßgrößen mit Hilfe von zwei oder mehreren, voneinanderunabhängigen Meßkanälen (M1,M2) erfaßt werden, dadurch **gekennzeichnet,** daß einer dieser Meßkanäle (M1) den gesamten Meßbereich und der oder die anderen Meßkanäle (M2) Teilmeßbereiche erfassen.

2. Verfahren nach Anspruch 1, dadurch **gekennzeichnet,** daß zur Fehlererkennung die Ausgangsgrößen der Meßkanäle (M1,M2) logisch verknüpft werden und die Übereinstimmung der Ausgangsgrößen der Meßkanälen(M1,M2) in dem von mehreren Meßkanälen erfaßten Meßbereich und/oder die Plausibilität der Meßgrößen oder Meßergebnisse überprüft wird.

3. Anordnung zur durch Durchführung des Verfahrens nach Anspruch 1 oder 2, insbesondere zur Erfassung und Auswertung von Gierraten bzw. Gierwinkelbewegungen eines Kraftfahrzeugs als Eingangsgrößen eines Kraftfahrzeug-Regelungssystems, dadurch **gekennzeichnet,** daß zur Messung der Gierrate des Kraftfahrzeugs zwei oder mehrere, voneinander unabhängige Meßkanäle (M1,M2)vorgesehen sind, von denen ein Meßkanal (M1) auf den gesamten Meßbereich, der oder die anderen Meßkanäle (M2) auf Teilmeßbereiche eingestellt sind, und daß die Ausgangssignale der Meßkanäle (M1,M2) in einer programmgesteuerten oder festverdrahteten Reglerlogik (3) auf Übereinstimmung und/oder auf Plausibilität der mit den Meßkanälen gewonnenen Meßergebnisse überwacht werden.

4. Anordnung nach Anspruch 3, dadurch **gekennzeichnet,** daß die Meßkanäle (M1,M2) Gierratensensoren (S1,S2) und Signalverstärkungsschaltungen (4,5) umfassen.

5. Anordnung nach Anspruch 4, dadurch **gekennzeichnet,** daß zwei Meßkanäle (M1,M2) vorgesehen sind, die beide physikalisch gleichartige Gierratensensoren (S1,S2) enthalten und durch Auslegung der zugehörigen Signalverstärkerschaltungen (4,5) auf die unterschiedlichen Meßbereiche eingestellt sind.

6. Anordnung nach einem oder mehreren der Ansprüche 3 bis 5, dadurch **gekennzeichnet,** daß die Gierratensensoren (S1,S2) als Stimmgabeloszillatoren, deren Stimmgabeln aus Quarz bestehen ausgebildet sind.

7. Anordnung nach einem oder mehreren der Ansprüche 3 bis 6, mit zwei Meßkanälen, dadurch **gekennzeichnet,** daß der auf den gesamten Meßbereich eingestellte Meßkanal (M1) einen Meßbereich für die Gierraten in der Größenordnung zwischen ± 65 deg./s und ± 85 deg./s, der auf den Teilmeßbereich eingestellte Meßkanal (M2) einen Meßbereich in der Größenordnung zwischen ±, 20 deg./s und ± 30 deg./s umfassen, wobei die beiden Gierratensensoren oder die Meßkanäle auf den gleichen Nullpunkt einstellbar sind.

8. Anordnung nach einem oder mehreren der Ansprüche 3 bis 7, mit zwei Meßkanälen, dadurch **gekennzeichnet,** daß der auf den gesamten Meßbereich eingestellte Meßkanal (M1) einen Gierratensensor (S1) mit einem fest vorgegebenen Skalierfaktor und der auf den Teilmeßbereich eingestellte Meßkanal (M2) einen Gierratensensor (S2) mit einem veränderlichen, steuerbaren Skalierfaktor aufweisen.

9. Anordnung nach Anspruch 8, dadurch **gekennzeichnet,** daß der veränderliche Skalierfaktor in Abhängigkeit von dem Giervorgang, d.h. von der jeweiligen Situation oder von der in der jeweiligen Situation benötigten Signaleauflösung steuerbar ist.

10. Anordnung nach einem der Ansprüche 3 bis 6, dadurch **gekennzeichnet,** daß der Mittelpunkt oder Nullpunkt des auf den Teilbereichmeßbereich eingestellten Meßkanals (M2) dem Mittelwert der Gierrate des aktuellen Giervorgangs nachführbar ist.

## Claims

1. Method for the acquisition and evaluation of safety-critical measured quantities, wherein equal measured quantities are sensed by way of two or more measuring channels (M1, M2) which are independent of one another,
**characterized** in that one of the measuring channels (M1) covers the entire range being measured and the other measuring channel(s) (M2) cover(s) partial measuring ranges.

2. Method as claimed in claim 1,
**characterized** in that for error detection, the output quantities of the measuring channels (M1, M2) are logically combined, and correlation of the output quantities of the measuring channels (M1, M2) in the measuring range covered by several measuring channels and/or plausibility of the measured quantities or measurement results is checked.

3. Arrangement for implementing the method as claimed in claim 1 or claim 2, more particularly, for the acquisition and evaluation of yaw rates or yaw angle motions of an automotive vehicle as input quantities of an automotive vehicle control system,
**characterized** in that for measuring the yaw rate of the automotive vehicle, two or more measuring channels (M1, M2) independent of each other are provided, one measuring channel (M1) thereof is set to the entire measuring range, and the other measuring channel(s) (M2) is(are) set to partial measuring ranges, and in that the output signals of the measuring channels (M1, M2) are monitored in a programmed or hard-wired controller logic (3) for correlation and/or plausibility of the measurement results produced by way of the measuring channels.

4. Arrangement as claimed in claim 3,
**characterized** in that the measuring channels (M1, M2) comprise yaw rate sensors (S1, S2) and signal amplifying circuits (4, 5).

5. Arrangement as claimed in claim 4,
**characterized** in that both measuring channels (M1, M2) include physically identical yaw rate sensors (S1, S2) and are set to the different measuring ranges by configuration of the associated signal amplifying circuits (4, 5).

6. Arrangement as claimed in any one or more of claims 3 to 5,
**characterized** in that the yaw rate sensors (S1, S2) are configured as tuning fork oscillators having tuning forks made of quartz.

7. Arrangement as claimed in any one or more of claims 3 to 6, including two measuring channels,
**characterized** in that the measuring channel (M1) set to the entire measuring range covers a measuring range for yaw rates in the magnitude of ± 65 deg./s to ± 85 deg./s, the measuring channel (M2) set to the partial measuring range covers a measuring range in the magnitude of ± 20 deg./s to ± 30 deg./s, and the two yaw rate sensors or the measuring channels are adjustable to the same zero point.

8. Arrangement as claimed in any one or more of claims 3 to 7, including two measuring channels,
**characterized** in that the measuring channel (M1) set to the entire measuring range includes a yaw rate sensor (S1) with an invariably predetermined scale factor, and the measuring channel (M2) set to the partial measuring range includes a yaw rate sensor (S2) with a variable, controllable scale factor.

9. Arrangement as claimed in claim 8,
**characterized** in that the variable scale factor is controllable in response to the yaw action, namely, in response to the respective situation or the signal resolution required in the respective situation.

10. Arrangement as claimed in any one of claims 3 to 6,
**characterized** in that the center or zero point of the measuring channel (M2) set to the partial measuring range can be adapted to the average value of the yaw rate of the present yaw action.

## Revendications

1. Procédé permettant de relever et d'analyser des grandeurs de mesure critiques en ce qui concerne la sécurité, selon lequel les mêmes grandeurs de mesure sont relevées au moyen de deux canaux de mesure (M1, M2), ou davantage, indépendants l'un de l'autre, caractérisé en ce que l'un (M1) de ces canaux de mesure relève l'ensemble du domaine de mesure et l'autre ou les autres canaux de mesure (M2) relèvent des domaines partiels.

2. Procédé suivant la revendication 1, caractérisé en ce que, pour la constatation des erreurs, les grandeurs de sortie des canaux de mesure (M1, M2) sont soumises à une combinaison logique et la coïncidence des grandeurs de sortie des canaux de mesure (M1, M2) dans le domaine de mesure relevé par plusieurs canaux de mesure et/ou la plausibilité des grandeurs de mesure ou des résultats de mesure sont contrôlés.

3. Agencement de mise en oeuvre du procédé suivant la revendication 1 ou 2, notamment pour déterminer et analyser des vitesses de lacet ou mouvements angulaires de lacet d'un véhicule automobile en tant que grandeurs d'entrée d'un système de régulation de véhicule automobile, caractérisé en ce que, pour mesurer la vitesse de lacet du véhicule automobile, il est prévu deux canaux de mesure (M1, M2) indépendants l'un de l'autre, ou davantage, parmi lesquels un canal de mesure (M1) est réglé sur l'ensemble du domaine de mesure et l'autre ou les autres canaux de mesure (M2) sont réglés sur des domaines de mesure partiels et en ce que les signaux de sortie des canaux de mesure (M1, M2) sont surveillés, dans une logique de régulateur (3) commandée par programme ou commandée de manière fixe ou en ce qui concerne une coïncidence et/ou une plausibilité des résultats de mesure obtenus au moyen des canaux de mesure.

4. Agencement suivant la revendication 3, caractérisé en ce que les canaux de mesure (M1, M2) comprennent des capteurs de vitesse de lacet (S1, S2) et des circuits d'amplification de signaux (4, 5).

5. Agencement suivant la revendication 4, caractérisé en ce qu'il est prévu deux canaux de mesure (M1, M2) qui contiennent deux capteurs de vitesse de lacet (S1, S2) matériellement identiques et qui sont réglés sur les différents domaines de mesure au moyen d'une conception des circuits d'amplification de signaux (4, 5) associés.

6. Agencement suivant une ou plusieurs des revendications 3 à 5, caractérisé en ce que les capteurs de vitesse de lacet (S1, S2) sont réalisés sous forme d'oscillateurs à diapason dont les diapasons sont en quartz.

7. Agencement suivant une ou plusieurs des revendications 3 à 6, comportant deux canaux de mesure, caractérisé en ce que le canal de mesure (M1) réglé sur l'ensemble du domaine de mesure présente un domaine de mesure pour les vitesses de lacet qui est approximativement compris entre ± 65 deg./s et ± 85 deg./s et le canal de mesure (M2) réglé sur le domaine de mesure partiel présente un domaine de mesure qui est approximativement compris entre ± 20 deg./s et ± 30 deg./s, les deux capteurs de vitesse de lacet ou les canaux de mesure étant réglables sur le même point zéro.

8. Agencement suivant une ou plusieurs des revendications 3 à 7, comportant deux canaux de mesure, caractérisé en ce que le canal de mesure (M1) réglé sur l'ensemble du domaine de mesure comprend un capteur de vitesse de lacet (S1) présentant un facteur d'échelle préfixé de manière fixe et le canal de mesure (M2) réglé sur le domaine de mesure partiel comprend un capteur de vitesse de lacet (S2) présentant un facteur d'échelle variable pouvant être commandé.

9. Agencement suivant la revendication 8, caractérisé en ce que le facteur d'échelle variable peut être commandé en fonction de l'opération de lacet, c'est-à-dire de la situation du moment ou de la résolution de signaux nécessaire dans la situation du moment.

10. Agencement suivant l'une des revendications 3 à 6, caractérisé en ce que le point central ou point zéro du canal de mesure (M2) réglé sur le domaine de mesure partiel est adaptable à la valeur centrale de la vitesse de lacet de l'opération de lacet réelle.
